# EUROPÄISCHE PATENTSCHRIFT

(11) **EP 3 887 232 B1**
(45) Veröffentlichungstag und Bekanntmachung des Hinweises auf die Patenterteilung: **30.08.2023**
(21) Anmeldenummer: 19817127.4
(22) Anmeldetag: 26.11.2019
(51) Int. Cl.: B62D 35/00, B62D 37/02

(54) **SPOILERVORRICHTUNG, FAHRZEUG MIT EINER DERARTIGEN SPOILERVORRICHTUNG SOWIE VERFAHREN ZUM BETREIBEN DER SPOILERVORRICHTUNG**
SPOILER APPARATUS, VEHICLE HAVING SUCH A SPOILER APPARATUS AND METHOD FOR OPERATING THE SPOILER APPARATUS
DISPOSITIF D'AILERON, VÉHICULE COMPRENANT UN TEL DISPOSITIF D'AILERON AINSI QUE PROCÉDÉ POUR FAIRE FONCTIONNER LE DISPOSITIF D'AILERON

(30) Priorität: 28.11.2018 DE 102018220484
(43) Veröffentlichungstag der Anmeldung: 06.10.2021
(73) Patentinhaber: VOLKSWAGEN AKTIENGESELLSCHAFT, 38440 Wolfsburg (DE); Hofmann, André, 38448 Wolfsburg (DE)
(72) Erfinder: KLOPP, Marcel, 38446 Wolfsburg (DE); LANFER, Ingo, 38448 Wolfsburg (DE); HOFMANN, André, 38448 Wolfsburg (DE)
(74) Vertreter: Andresen, Heiko
(86) Internationale Anmeldenummer: PCT/DE2019/101014
(87) Internationale Veröffentlichungsnummer: WO 2020/108703

(56) Entgegenhaltungen:
- DE-A1- 10 309 369
- DE-A1-102008 024 891
- DE-U1-202011 002 434

## Beschreibung

Die Erfindung betrifft eine Spoilervorrichtung für ein Fahrzeug nach dem Oberbegriff des Patentanspruchs 1 der Erfindung. Gemäß Anspruch 8 der Erfindung betrifft dieselbe des Weiteren ein Fahrzeug, insbesondere Kraftfahrzeug, mit einer derartigen Spoilervorrichtung. Gemäß der Merkmalskombination des Patentanspruchs 9 der Erfindung betrifft dieselbe ferner ein Verfahren zum Betreiben der Spoilervorrichtung.

Aus der DE 101 36 323 A1 und DE 20 2011 002434 ist ein Stufenheck-Fahrzeug mit einer aktiv eingesetzten Spoilereinrichtung bekannt, welche zwei Spoilerelemente umfasst, die an beiden seitlichen Enden des Fahrzeugs angeordnet sind. Die beiden Spoilerelemente können über eine Regelungseinrichtung und daran angeschlossene Steuereinrichtungen getrennt voneinander in Abhängigkeit von Parametern, wie beispielsweise der Gierrate, der Fahrwerkskinematik und/oder der Geschwindigkeit des Fahrzeugs stufenlos zwischen einer Ruheposition und einer maximal ausgefahrenen Position angesteuert werden. Die Spoilerelemente sind um eine Drehachse schwenkbar an der Karosserie des Fahrzeugs angelenkt und mittels je einer zugeordneten Verstellvorrichtung verstellbar. Die jeweilige Verstellvorrichtung umfasst ein Vier-Gelenk, welches zwei Streben aufweist, die jeweils über ein gemeinsames Gelenk miteinander verbunden sind. Über weitere Gelenke sind die vom jeweils gemeinsamen Gelenk beabstandeten äußeren Enden der Streben zum einen an der Innenfläche des jeweiligen Spoilerelements und zum anderen an der Karosserie befestigt. Die Verstellvorrichtung wird mittels eines ansteuerbaren Antriebs, wie eines Elektromotors, verstellt. Die DE 10 2005 021 832 A1 beschreibt eine Luftleitvorrichtung eines Fahrzeugs mit einem an einer Spoilerbasis befestigten Spoiler sowie mit einer Verstelleinrichtung zum Verstellen der Spoilerbasis zwischen einer Ruhestellung, in welcher der Spoiler im Wesentlichen in der Fahrzeugkontur liegt, und wenigstens einer ersten Betriebsstellung, in welcher der Spoiler über der Fahrzeugkontur ausgestellt ist. Die Verstelleinrichtung umfasst eine an der Spoilerbasis angelenkte Schwenklenkeranordnung. Es ist ferner eine zweite Betriebsstellung vorgesehen, in welcher der Spoiler während der Fahrt über die erste Betriebsstellung hinaus noch weiter ausgestellt ist und so eine Bremswirkung bereitstellt (Luftbremse-Funktion). Darüber hinaus kann auch eine stufenlose Verstellung des Spoilers vorgesehen sein. Die Verstelleinrichtung ist in Fahrzeugquerrichtung gesehen mittig des Fahrzeugs angeordnet. Darüber hinaus können auch symmetrisch zu einer vertikalen Fahrzeuglängsmittelebene zwei Verstelleinrichtungen vorgesehen sein. Die Verstelleinrichtung wird beispielsweise in Abhängigkeit einer Bremspedalstellung mittels eines Elektromotors betrieben. Die WO 2004/065740 A1 beschreibt ein Scharnier für ein an einem Fahrzeug angelenktes Teil, wie eine Fahrzeugklappe, umfassend ein erstes Scharnierteil, das an einem der Türanordnungsteile Klappe oder Klappenrahmen befestigbar ist, ein zweites Scharnierteil, das an dem jeweils anderen Türanordnungsteil befestigbar ist, einen Scharnierstift, der das erste und das zweite Scharnierteil um eine Schwenkachse schwenkbar miteinander verbindet, und eine das erste mit dem zweiten Scharnierteil koppelnde Hebelanordnung. Die Hebelanordnung umfasst wenigstens einen ersten Hebel, wobei dieser schwenkbar mit dem an der Klappe angeordneten Scharnierteil verbunden ist. Darüber hinaus ist an dem der Klappe angeordneten Scharnierteil einen Halterung für einen Motor vorgesehen, wobei der erste Hebel von besagtem Motor drehantreibbar ist. Beim motorischen Öffnen oder Schließen der Fahrzeugklappe ist ein Abbremsen derselben vorgesehen. Die genaue Lage der Klappe wird durch einen Sensor, beispielsweise in Form eines in eines der Schwenkgelenke eingebauten Potentiometers erfasst. Durch die besagte WO 2004/065740 A1 ist u.a. auch ein verstellbarer Spoiler mit erfasst.

Aufgabe der Erfindung ist es, eine im Hinblick auf den Stand der Technik weiter verbesserte Spoilervorrichtung zu schaffen, welche aufwandsminimiert ist. Des Weiteren ist es Aufgabe der Erfindung, ein Fahrzeug, insbesondere Kraftfahrzeug, mit einer derartigen Spoilervorrichtung zur Verfügung zu stellen. Ferner ist es Aufgabe der Erfindung, ein Verfahren zum Betreiben der Spoilervorrichtung anzugeben.

Ausgehend von einer Spoilervorrichtung für ein Fahrzeug, insbesondere Kraftfahrzeug, mit einem sich in Fahrzeugquerrichtung (y-Richtung) erstreckenden Spoilerblatt, welches um eine Fahrzeugquerachse schwenkbar an der Fahrzeugkarosserie oder einem fahrzeugfesten Spoilergehäuse gelagert und mittels eines Elektromotors aktiv von einer ersten Betriebsstellung in zumindest eine zweite Betriebsstellung und zurück überführbar ist, wobei das Spoilerblatt beidenends je eine erste Lagerstelle aufweist und dort unter Vermittlung je eines Scharniers schwenkbar an der Fahrzeugkarosserie oder am Spoilergehäuse gelagert ist, wird die gestellte Aufgabe dadurch gelöst, dass die Scharniere zur schwenkbaren Lagerung des Spoilerblattes an der Fahrzeugkarosserie oder dem fahrzeugfesten Spoilergehäuse durch je einen bogenförmig ausgebildeten Scharnierhebel gebildet sind, welche Scharnierhebel einenends an der Fahrzeugkarosserie oder am fahrzeugfesten Spoilergehäuse drehbar und anderenends am Spoilerblatt drehfest gelagert sind, und dass in Fahrzeugquerrichtung (y-Richtung) gesehen zwischen den besagten ersten Lagerstellen der Elektromotor an der Fahrzeugkarosserie oder am fahrzeugfesten Spoilergehäuse festgelegt ist und mittels eines Kniehebelmechanismus in einer zweiten Lagerstelle des Spoilerblattes mit demselben wirkverbunden ist.

Mit dem vorgesehenen Scharniersystem, welches bogenförmig ausgebildete Scharnierhebel, die in der Fachwelt gelegentlich auch als Schwanenhals-Scharniere bezeichnet werden, umfasst und in Kombination mit dem Kniehebelmechanismus zur treibenden Anbindung des Elektromotors an das Spoilerblatt ist eine besonders flache und demgemäß bauraummindernde Bauweise der Spoilervorrichtung ermöglicht bzw. erzielt.

Die Unteransprüche beschreiben bevorzugte Weiterbildungen oder Ausgestaltungen der Erfindung.

Gemäß einer besonders praxisnahen Ausbildung des besagten Kniehebelmechanismus ist vorgesehen, dass dieser einen ersten, einenends mit einer Ausgangswelle drehfest verbundenen Hebel aufweist, welcher erste Hebel anderenends mit einem Ende eines zweiten Hebels gelenkig verbunden ist, wobei das andere Ende des zweiten Hebels in der zweiten Lagerstelle des Spoilerblattes mit demselben gelenkig verbunden ist. Vorteilhaft ist dabei der erste Hebel U-Profil-förmig mit einem zwei beabstandet zueinander angeordnete Seitenwangen untereinander verbindenden Steg ausgebildet, wobei der Steg eine Bohrung zur drehfesten Anbindung der Ausgangswelle aufweist und die Seitenwangen untereinander korrespondierende Bohrungen zur gelenkigen Anbindung des zweiten Hebels mittels einer Achse aufweisen. Hierdurch ist eine besonders stabile und platzsparende Ausbildung des Kniehebelmechanismus zu verzeichnen. Bevorzugt ist dabei der zweite Hebel zwischen den besagten Seitenwangen angeordnet und nimmt die Beabstandung zwischen denselben weitestgehend vollständig ein ohne die erforderliche Gelenkigkeit zu behindern. Wie die Erfindung weiter vorsieht, weist das dem Spoilerblatt zugewandte und mit demselben durch eine Schraubverbindung drehfest verbindbare erste Ende des bogenförmig ausgebildeten Scharnierhebels (Schwanenhals-Scharnier) bevorzugt zumindest ein Mittel zur Positionierung des Scharnierhebels relativ zum Spoilerblatt auf. Hierdurch ist äußerst komfortabel eine Feinausrichtung des Spoilerblattes am Scharnier relativ zur Konturgebung der Fahrzeugkarosserie und/oder des Spoilergehäuses ermöglicht. Gemäß einer besonders einfachen und funktionssicheren Ausführungsform der Erfindung ist das Mittel zur Positionierung durch ein Langloch im Scharnierhebel für besagte Schraubverbindung desselben mit dem Spoilerblatt sowie durch eine stirnseitige, konkave, erste Kontur des Scharnierhebels, welche erste Kontur mit einer konvexen, zweiten Kontur des Spoilerblattes korrespondiert oder umgekehrt, gebildet. Wie die Erfindung weiter vorsieht, ist der Elektromotor bevorzugt mit einer elektronischen Steuer- und Regelungseinheit (ECU) verbunden und in Abhängigkeit von in einer Software derselben hinterlegten Systemparametern sowie aktuell sensierten Fahrtzuständen des Fahrzeugs in definierten Stufen oder stufenlos regel- und steuerbar. Um besagte Regel- und Steuerungsfunktion der elektronischen Steuer- und Regelungseinheit (ECU) für den Elektromotor sowie eine Sicherheitsfunktion bei etwaige zu verzeichnenden Funktionsstörungen des Systems ausreichend gewährleiten zu können, weist die Spoilervorrichtung Mittel zur Wegerfassung und/oder Endanschläge zur Positionserfassung des Spoilerblattes auf, welche Mittel zur Wegerfassung und/oder Endanschläge Signale generieren, die ebenfalls der Steuer- und Regelungseinheit (ECU) zur Auswertung und Generierung von Regel- und Steuerrungssignalen für den Elektromotor zur Verfügung gestellt sind/werden.

Die Erfindung betrifft auch ein Fahrzeug, insbesondere Kraftfahrzeug, mit einer Spoilervorrichtung der vorbeschriebenen Art.

Das Verfahren zum Betreiben einer Spoilervorrichtung der vorbeschriebenen Art zeichnet sich im Wesentlichen dadurch aus, dass Systemparameter der Steuer- und Regelungseinheit (ECU) so ausgelegt sind, dass die Verstellung des Spoilerblattes sowohl geschwindigkeitsabhängig als auch nach dem Grad der Verzögerung des Fahrzeugs durchgeführt wird, wobei im Hinblick auf eine Verstellung des Spoilerblattes in definierten Stufen zumindest eine Stufe für den Fahrbetrieb des Fahrzeugs und zusätzlich eine weitere Stufe bei maximaler Verzögerung des Fahrzeugs vorgesehen sind, wobei
- eine Verstellung des Spoilerblattes von einer Stufe zur anderen, d.h., sowohl zur höheren als auch zur niederen, nur dann erfolgt, wenn für eine vorgegebene Zeit von zumindest 5s der betreffende Geschwindigkeitsbereich eingehalten wird, und wobei
- im Falle, das Fahrzeug kommt in eine Notbremssituation mit maximaler Verzögerung, unabhängig der aktuell zu verzeichnenden Stufe des Spoilerblattes die Verstellung desselben unmittelbar in die weitere Stufe erfolgt, welche mit einem maximalen Verstellwinkel und einem maximalen Luftwiderstand einhergeht.

Vorzugweise jedoch sind drei Stufen für den Fahrbetrieb des Fahrzeugs vorgesehen derart, dass
- im Bereich vom Stillstand des Fahrzeugs bis etwa 120 km/h Fahrtgeschwindigkeit desselben das Spoilerblatt sich in einer ersten Betriebsstellung, die der Grundstellung desselben entspricht, befindet ("Stufe 0"), dass
- zwischen etwa 120 km/h und etwa 150 km/h der Anstellwinkel des Spoilerblattes erhöht wird, und dieses sich in einer zweiten Betriebsstellung befindet, welche einer "Stufe 1" entspricht, dass
- zwischen etwa 150 km/h und etwa 180 km/h der Anstellwinkel des Spoilerblattes weiter erhöht wird, und dieses sich in einer dritten Betriebsstellung befindet, welche einer "Stufe 2" entspricht, und dass
- ab 180 km/h der Anstellwinkel des Spoilerblattes noch weiter erhöht wird, und dieses sich in einer dritten Betriebsstellung befindet, welche einer "Stufe 3" entspricht.

Hieran schließt sich die weitere Stufe ("Stufe 4") des Spoilerblattes an, welche mit einem maximalen Verstellwinkel und einem maximalen Luftwiderstand desselben einhergeht.

Das vorstehend beschriebene Verfahren hat insbesondere auch den Vorteil, dass im Hinblick auf dem unter dem ersten Anstrich angegebenen Merkmal bei einer "sportlichen" Fahrweise, d.h., einer Fahrweise mit einem schnellen und sich wiederholenden Geschwindigkeitswechsel, die Verstellung des Spoilerblattes auf ein notwendiges Minimum reduziert wird, welches zu minimiertem Verschleiß sämtlicher Bauteile führt.

Um das System vor Beschädigung zu schützen, ist in Weiterbildung des erfindungsgemäßen Verfahrens vorteilhaft vorgesehen, dass im Falle einer undefinierten Abweichung des Systems von definierten Systemparametern und -vorgaben, die Verstellung des Spoilerblattes gestoppt und das System in einen Modus "Störung" gesetzt wird. In Kombination mit vorstehender Maßnahme oder in Alleinstellung kann des Weiteren vorgesehen sein, dass die Stromaufnahme des Elektromotors laufend gemessen sowie ausgewertet wird und bei einer Abweichung oder eines Trends einer Abweichung der gemessenen von vorgegebenen Werten, eine sofortige Abschaltung des Verstellsystems für das Spoilerblatt erfolgt und dieses in besagten Modus "Störung" gesetzt wird, wobei in beiden vorstehend beschriebenen Fällen der Modus "Störung" akustisch und/oder optisch dem Fahrzeugführer mitgeteilt wird. Ursache derartiger Störungen können beispielsweise mechanische und/oder elektronische Schäden an Systemkomponenten oder im System, Fremdkörper im Verstellbereich des Spoilerblattes und/oder dgl. mehr sein.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden. Es zeigen:
- Fig. 1: äußerst schematisch eine Seitensicht eines mit der erfindungsgemäßen Spoilervorrichtung ausgestatteten Fahrzeugs,
- Fig. 2: eine Heckansicht auf die Heckklappe des Fahrzeugs nach Fig. 1 mit der daran befestigten Spoilervorrichtung samt einem verstellbaren Spoilerblatt derselben in einer ersten Betriebs- respektive Grundstellung desselben,
- Fig. 3: die Ansicht nach Fig. 2 mit dem Spoilerblatt in einer von der ersten abweichenden Betriebsstellung,
- Fig. 4: eine perspektivische Einzelansicht des Spoilerblattes samt Scharnieren desselben,
- Fig. 5: eine perspektivische Detaildarstellung eines Scharniers nach Fig. 4 im Zusammenbau mit einem das Spoilerblatt tragenden karosseriefesten Spoilergehäuse,
- Fig. 6: eine perspektivische Einzeldarstellung eines Elektromotors zum Antrieb des verstellbaren Spoilerblattes, und
- Fig. 7: eine Detaildarstellung des Elektromotors in Wirkverbindung mit dem Spoilerblatt.

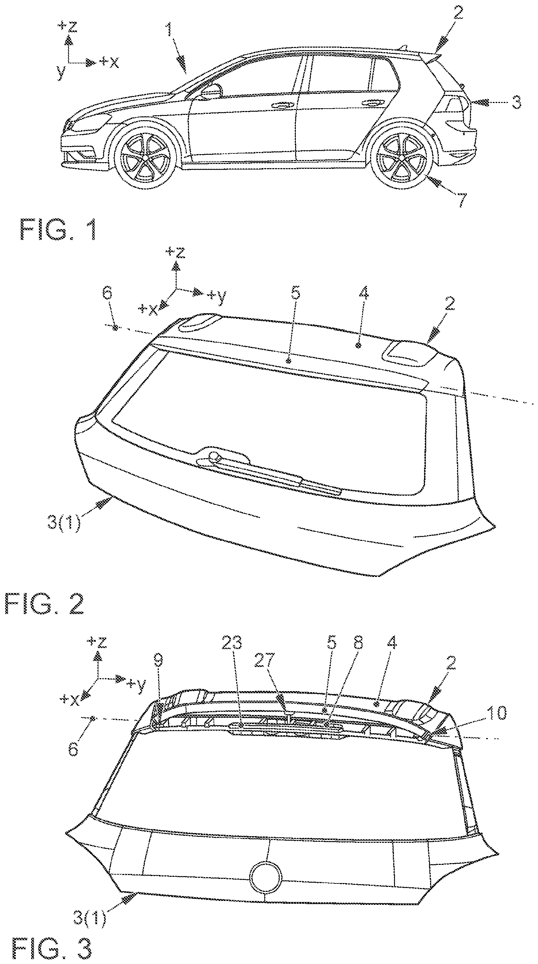

Fig. 1 zeigt zunächst ein Fahrzeug 1, vorliegend einen Personenkraftwagen mit Steilheck, mit einer Spoilervorrichtung 2, welche im Dachbereich einer Heckklappe 3 an derselben befestigt ist. Wie den Fig. 1 bis 3 weiter zu entnehmen ist, weist die Spoilervorrichtung 2 ein unmittelbar an der Heckklappe 3 sozusagen karosseriefest angeordnetes Spoilergehäuse 4 auf, an welchem ein sich in Fahrzeugquerrichtung (y-Richtung) erstreckendes Spoilerblatt 5 um eine Fahrzeugquerachse 6 schwenkbar gelagert ist. Wie bereits der Beschreibungseinleitung zu entnehmen ist, dient die Spoilervorrichtung 2 bzw. deren Spoilerblatt 5 der Beinflussung der Aerodynamik des Fahrzeugs 1 insbesondere bei hohen Fahrtgeschwindigkeiten, um das Fahrzeugheck mit Abtrieb zu versehen und so unter anderem auch die Traktion der Fahrzeugräder 7 zu verbessern.

Das Spoilerblatt 5 ist mittels eines Elektromotors 8 aktiv von einer ersten Betriebsstellung (vgl. Fig. 1 und 2), welche einer Grundstellung des Spoilerblattes 5 bei relativ geringen Fahrtgeschwindigkeiten bis 120 km/h entspricht, in zumindest eine zweite Betriebsstellung (vgl. Fig. 3), welche bei einer Fahrtgeschwindigkeit ≥ 120 km/h eingestellt wird, und zurück überführbar. Das Spoilerblatt 5 ist in der besagten zweiten Betriebsstellung steiler angestellt als in der ersten bzw. Grundstellung desselben, wodurch der Abtrieb des Fahrzeughecks verstärkt wird.

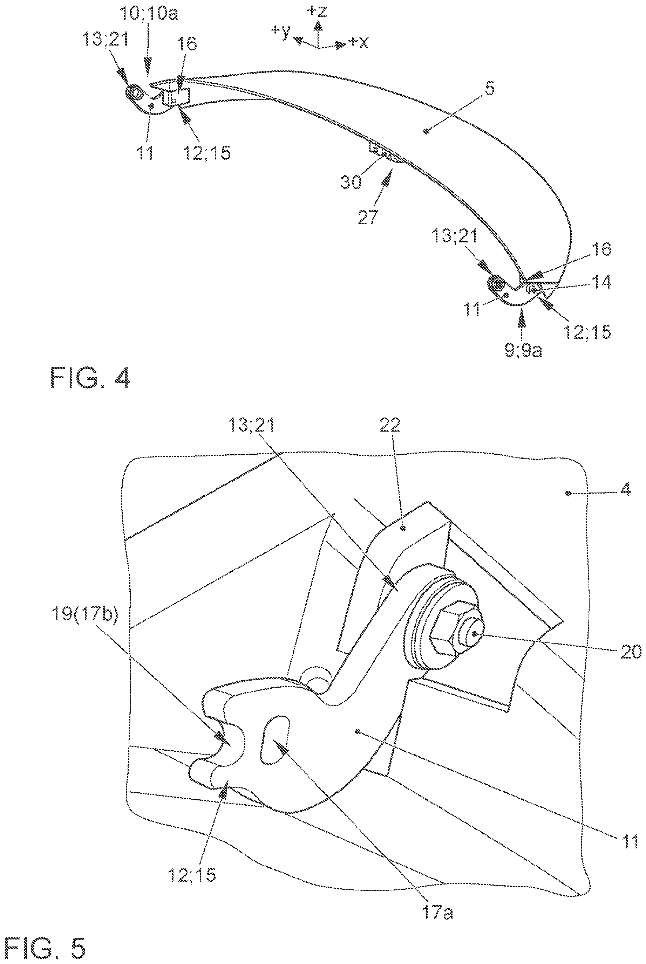

Wie den Fig. 3 und 4 weiter zu entnehmen ist, weist das Spoilerblatt 5 beidenends je eine erste Lagerstelle 9, 10 mit je einem Scharnier 9a, 10a auf, vermittels derer das Spoilerblatt 5 um besagte Fahrzeugquerachse 6 schwenkbar am Spoilergehäuse 4 gelagert ist. Ein jedes Scharnier 9a, 10a ist allein durch einen bogenförmigen, vorliegend zweifach gebogenen Scharnierhebel 11 gebildet, welches Scharnier 9a, 10a in der Fachwelt gelegentlich auch als Schwanenhals-Scharnier 9a, 10a bezeichnet wird.

Ein jeder Scharnierhebel 11 ist einenends am Spoilergehäuse 4 drehbar und anderenends am Spoilerblatt 5 drehfest gelagert. Fig. 4 zeigt im Wesentlichen die drehfeste Lagerung 12 der Scharnierhebel 11 am Spoilerblatt 5, wogegen Fig. 5 im Wesentlichen die drehbare Lagerung 13 der Scharnierhebel 11 am Spoilergehäuse 4 zeigt.

Die drehfeste Lagerung 12 eines jeden Scharnierhebels 11 am Spoilerblatt 5 ist durch drehfeste Verschraubung 14 des dem Spoilerblatt 5 zugewandten ersten Endes 15 des Scharnierhebels 11 mit einer Lageraufnahme 16 des Spoilerblattes 5 bewirkt. Das besagte erste Ende 15 des Scharnierhebels 11 ist auch sehr gut in Fig. 5 ersichtlich. Um komfortabel eine Feinausrichtung des Spoilerblattes 5 am Scharnier 9a, 10a bzw. dem betreffenden Scharnierhebel 11 relativ zur Konturgebung der Fahrzeugkarosserie und/oder des Spoilergehäuses 4 zu ermöglichen, sind Mittel 17a, 17b zur Positionierung vorgesehen. Ein Mittel 17a zur Positionierung ist dabei durch ein Langloch im Scharnierhebel 11 gebildet, welches von einer Befestigungsschraube 18 (vgl. Fig. 4) zur drehfesten Verbindung des Scharnierhebels 11 mit dem Spoilerblatt 5 durchsetzt ist. Das weitere Mittel 17b zur Positionierung ist durch eine stirnseitige, konkave, erste Kontur 19 des besagten ersten Endes 15 des Scharnierhebels 11 gebildet. Die stirnseitige, erste Kontur 19 des Scharnierhebels 11 korrespondiert mit einer nicht zeichnerisch dargestellten konvexen, zweiten, vorzugsweise zur ersten formkomplementären Kontur des Spoilerblattes 5. Selbstverständlich kann auch der umgekehrte Fall der miteinander korrespondierenden Konturierungen vorgesehen sein und ist demgemäß durch die Erfindung ebenfalls mit erfasst.

Die drehbare Lagerung 13 der Scharnierhebel 11 am Spoilergehäuse 4 ist gemäß den Fig. 4 und 5 mittels je einer Lagerachse 20 bewirkt, welche sowohl eine nicht zeichnerisch dargestellte Bohrung im zweiten Ende 21 des Scharnierhebels 11 als auch eine nicht zeichnerisch dargestellte Bohrung in einer Lageraufnahme 22 im Spoilergehäuse 4 durchsetzt. Die Lagerachsen 20 sind in der oben bereits erwähnten Fahrzeugquerachse 6 angeordnet.

Was den Elektromotor 8 anbelangt, ist dieser bevorzugt zwischen den beiden ersten Lagerstellen 9 und 10 des Spoilerblattes 5 unter Vermittlung eines Halters 23 am Spoilergehäuse 4 festgelegt. Der Elektromotor 8 weist gemäß diesem Ausführungsbeispiel ein Planetengetriebe 24 auf, dessen Ausgangswelle 25 unter Vermittlung eines Kniehebelmechanismus 26 mit einer zentral zwischen den ersten Lagerstellen 9, 10 angeordneten zweiten Lagerstelle 27 des Spoilerblattes 5 wirkverbunden ist (vgl. Fig. 3, 6 und 7). Durch den Einsatz des Planetengetriebes 24 ist eine kompakte Bauweise des Antriebs sowie ein verhältnismäßig hohes Drehmoment bei geringer Stromaufnahme erzielbar. Durch die Untersetzung des Planetengetriebes 24 unterstützt die interne Selbsthemmung desselben das System, dem Zurückdrehen des aufgestellten Spoilerblattes 5 in dessen Grundstellung infolge des angreifenden Fahrtwindes entgegen zu wirken.

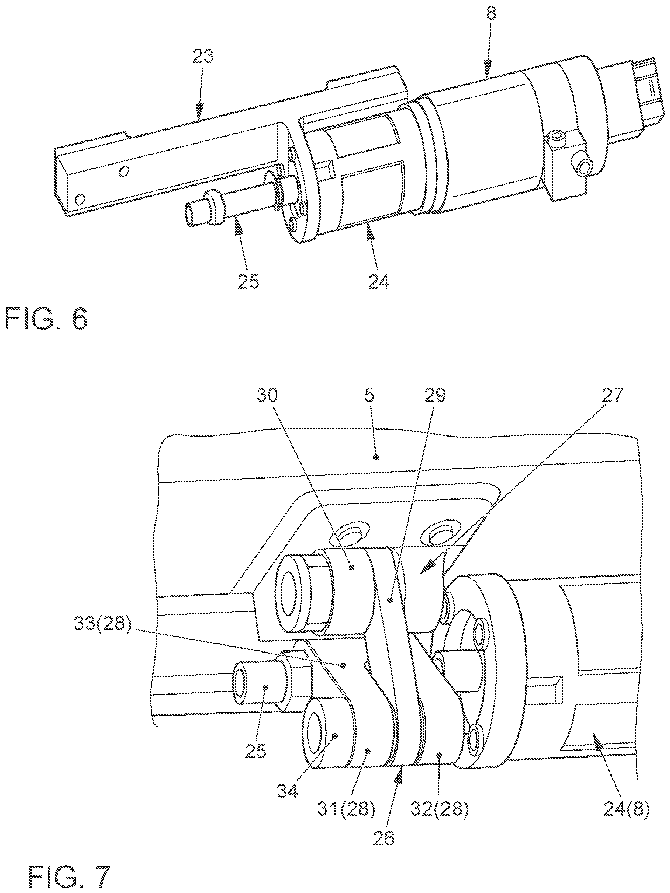

Gemäß Fig. 7 weist der besagte Kniehebelmechanismus 26 einen ersten, einenends mit der Ausgangswelle 25 drehfest verbundenen Hebel 28 auf, welcher erste Hebel 28 anderenends mit einem Ende eines zweiten Hebels 29 gelenkig verbunden ist. Das andere Ende des zweiten Hebels 29 ist in der zweiten Lagerstelle 27 des Spoilerblattes 5 mit demselben gelenkig verbunden. Das Spoilerblatt 5 weist hierzu eine Lageraufnahme 30 auf bzw. bildet eine solche einstückig aus. Wie der Fig. 7 noch zu entnehmen ist, ist der erste Hebel 28 U-Profil-förmig mit einem zwei beabstandet zueinander angeordnete Seitenwangen 31, 32 untereinander verbindenden Steg 33 ausgebildet. Der Steg 33 weist eine nicht zeichnerisch dargestellte Bohrung zur drehfesten Anbindung der Ausgangswelle 25 auf. Die Seitenwangen 31, 32 weisen nicht zeichnerisch dargestellte und untereinander korrespondierende Bohrungen zur gelenkigen Anbindung des zweiten Hebels 29 mittels einer Achse 34 auf. Hierzu ist der zweite Hebel 29 zwischen den besagten Seitenwangen 31, 32 angeordnet und nimmt die Beabstandung zwischen denselben weitestgehend vollständig ein ohne die erforderliche Gelenkigkeit zu behindern.

Der Elektromotor 8 ist mit einer nicht zeichnerisch dargestellten elektronischen Steuer- und Regelungseinheit (ECU) verbunden und in Abhängigkeit von in einer Software derselben hinterlegten Systemparametern sowie aktuell sensierten Fahrtzuständen des Fahrzeugs 1 in definierten Stufen oder stufenlos regel- und steuerbar. Um besagte Regel- und Steuerungsfunktion der elektronischen Steuer- und Regelungseinheit (ECU) für den Elektromotor 8 sowie eine Sicherheitsfunktion bei etwaige zu verzeichnenden Funktionsstörungen des Systems ausreichend gewährleiten zu können, weist die Spoilervorrichtung Mittel zur Wegerfassung, wie an sich bekannte Potentiometer und/oder Endanschläge, beispielsweise in Form von Mikroschaltern, zur Positionserfassung des Spoilerblattes 5 auf, welche Mittel zur Wegerfassung und/oder Endanschläge Signale generieren, die ebenfalls der Steuer- und Regelungseinheit (ECU) zur Auswertung und Generierung von Regel- und Steuerrungssignalen für den Elektromotor 8 zur Verfügung gestellt sind/werden.

Ein geeignetes Verfahren zum Betreiben einer Spoilervorrichtung der vorbeschriebenen Art zeichnet sich im Wesentlichen dadurch aus, dass Systemparameter der Steuer- und Regelungseinheit (ECU) so ausgelegt sind, dass die Verstellung des Spoilerblattes 5 sowohl geschwindigkeitsabhängig als auch nach dem Grad der Verzögerung des Fahrzeugs 1 durchgeführt wird, wobei im Hinblick auf eine Verstellung des Spoilerblattes 5 in definierten Stufen zumindest eine Stufe für den Fahrbetrieb des Fahrzeugs 1 und zusätzlich eine weitere Stufe bei maximaler Verzögerung des Fahrzeugs 1 vorgesehen sind, wobei
- eine Verstellung des Spoilerblattes 5 von einer Stufe zur anderen, d.h., sowohl zur höheren als auch zur niederen, nur dann erfolgt, wenn für eine vorgegebene Zeit von zumindest 5s der betreffende Geschwindigkeitsbereich eingehalten wird, und wobei
- im Falle, das Fahrzeug 1 kommt in eine Notbremssituation mit maximaler Verzögerung, unabhängig der aktuell zu verzeichnenden Stufe des Spoilerblattes 5 die Verstellung desselben unmittelbar in die weitere Stufe erfolgt, welche mit einem maximalen Verstellwinkel und einem maximalen Luftwiderstand einhergeht.

Vorzugweise jedoch sind jedoch drei Stufen für den Fahrbetrieb des Fahrzeugs 1 vorgesehen und zwar derart, dass
- im Bereich vom Stillstand des Fahrzeugs 1 bis etwa 120 km/h Fahrtgeschwindigkeit desselben das Spoilerblatt 5 sich in einer ersten Betriebsstellung, die der Grundstellung desselben entspricht, befindet ("Stufe 0"), dass
- zwischen etwa 120 km/h und etwa 150 km/h der Anstellwinkel des Spoilerblattes 5 erhöht wird, und dieses sich in einer zweiten Betriebsstellung befindet, welche einer "Stufe 1" entspricht, dass
- zwischen etwa 150 km/h und etwa 180 km/h der Anstellwinkel des Spoilerblattes 5 weiter erhöht wird, und dieses sich in einer dritten Betriebsstellung befindet, welche einer "Stufe 2" entspricht, und dass
- ab 180 km/h der Anstellwinkel des Spoilerblattes 5 noch weiter erhöht wird, und dieses sich in einer dritten Betriebsstellung befindet, welche einer "Stufe 3" entspricht.

Hieran schließt sich die weitere Stufe ("Stufe 4") des Spoilerblattes 5 an, welche mit einem maximalen Verstellwinkel und einem maximalen Luftwiderstand desselben einhergeht.

Wie bereits oben dargetan, hat das vorstehend beschriebene Verfahren den Vorteil, dass im Hinblick auf dem unter dem ersten Anstrich angegebenen Merkmal bei einer "sportlichen" Fahrweise, d.h., einer Fahrweise mit einem schnellen und sich wiederholenden Geschwindigkeitswechsel, die Verstellung des Spoilerblattes 5 auf ein notwendiges Minimum reduziert wird, welches zu minimiertem Verschleiß sämtlicher Bauteile führt.

Um das System vor Beschädigung zu schützen, ist des Weiteren vorgesehen, dass im Falle einer undefinierten Abweichung des Systems von definierten Systemparametern und - vorgaben, die Verstellung des Spoilerblattes 5 gestoppt und das System in einen Modus "Störung" gesetzt wird. In Kombination mit vorstehender Maßnahme oder in Alleinstellung ist des Weiteren bevorzugt vorgesehen, dass die Stromaufnahme des Elektromotors 8 laufend gemessen sowie ausgewertet wird und bei einer Abweichung oder eines Trends einer Abweichung der gemessenen von vorgegebenen Werten, eine sofortige Abschaltung des Verstellsystems für das Spoilerblatt 5 erfolgt und dieses in besagten Modus "Störung" gesetzt wird. Vorteilhaft wird in den beiden vorstehend beschriebenen Fällen der Modus "Störung" akustisch und/oder optisch dem Fahrzeugführer mitgeteilt. Ursache derartiger Störungen können beispielsweise mechanische und/oder elektronische Schäden an Systemkomponenten oder im System, Fremdkörper im Verstellbereich des Spoilerblattes 5 und/oder dgl. mehr sein.

Das vorstehend beschriebene Ausführungsbeispiel der Erfindung stellt auf ein Spoilerblatt 5 ab, welches am besagten Spoilergehäuse 4 schwenkbar gelagert ist. Die Erfindung beschränkt sich jedoch nicht auf diese konkrete Ausgestaltung der Spoilervorrichtung 2, sondern erfasst auch eine Spoilervorrichtung 2, welche ein Spoilerblatt 5 aufweist, dass unmittelbar an einem Karosseriebauteil des Fahrzeugs 1, wie an der Heckklappe 3, am Fahrzeugdach o.a. schwenkbar angelenkt ist. Ein Spoilergehäuse 4 ist in diesem Fall entbehrlich (nicht zeichnerisch dargestellt). Darüber hinaus beschränkt sich die Erfindung nicht auf eine im Dachbereich des Fahrzeugs 1 an beispielsweise der besagten Heckklappe 3 des Steilhecks des Fahrzeugs 1 angeordnete Spoilervorrichtung 2, sondern erfasst jedweden geeigneten Standort für eine bestimmungsgemäß einzusetzende Spoilervorrichtung 2 am Fahrzeug 1, beispielsweise unmittelbar auf einem Dach der Fahrzeugkarosserie oder an einer Klappe eines mit einem Stufenheck ausgebildeten Fahrzeugs 1 (nicht zeichnerisch dargestellt).

**Bezugszeichenliste**

| | | | |
|---|---|---|---|
| 1 | Fahrzeug | 17b | Mittel zur Positionierung |
| 2 | Spoilervorrichtung | 18 | Befestigungsschraube |
| 3 | Heckklappe | 19 | Kontur (Scharnierhebel 11) |
| 4 | Spoilergehäuse | 20 | Lagerachse |
| 5 | Spoilerblatt | 21 | zweites Ende (Scharnierhebel 11) |
| 6 | Fahrzeugquerachse | 22 | Lageraufnahme (Spoilergehäuse 4) |
| 7 | Fahrzeugrad | 23 | Halter |
| 8 | Elektromotor | 24 | Planetengetriebe |
| 9 | Lagerstelle (Spoilerblatt 5) | 25 | Ausgangswelle |
| 9a | Scharnier | 26 | Kniehebelmechanismus |
| 10 | Lagerstelle (Spoilerblatt 5) | 27 | Lagerstelle (Spoilerblatt 5) |
| 10a | Scharnier | 28 | erster Hebel |
| 11 | Scharnierhebel | 29 | zweiter Hebel |
| 12 | Lagerung | 30 | Lageraufnahme (Spoilerblatt 5) |
| 13 | Lagerung | 31 | Seitenwange |
| 14 | Verschraubung | 32 | Seitenwange |
| 15 | erstes Ende (Scharnierhebel 11) | 33 | Steg |
| 16 | Lageraufnahme (Spoilerblatt 5) | 34 | Achse |
| 17a | Mittel zur Positionierung | | |

## Patentansprüche

1. Spoilervorrichtung für ein Fahrzeug (1), insbesondere Kraftfahrzeug, mit einem sich in Fahrzeugquerrichtung (y-Richtung) erstreckenden Spoilerblatt (5), welches um eine Fahrzeugquerachse (6) schwenkbar an der Fahrzeugkarosserie oder einem fahrzeugfesten Spoilergehäuse (4) gelagert und mittels eines Elektromotors (8) aktiv von einer ersten Betriebsstellung in zumindest eine zweite Betriebsstellung und zurück überführbar ist, wobei das Spoilerblatt (5) beidenends je eine erste Lagerstelle (9, 10) aufweist und dort unter Vermittlung je eines Scharniers (9a, 10a) schwenkbar an der Fahrzeugkarosserie oder am Spoilergehäuse (4) gelagert ist, **dadurch gekennzeichnet, dass** die Scharniere (9a, 10a) zur schwenkbaren Lagerung des Spoilerblattes (5) an der Fahrzeugkarosserie oder dem fahrzeugfesten Spoilergehäuse (4) durch je einen bogenförmig ausgebildeten Scharnierhebel (11) gebildet sind, welche Scharnierhebel (11) einenends an der Fahrzeugkarosserie oder am fahrzeugfesten Spoilergehäuse (4) drehbar und anderenends am Spoilerblatt (5) drehfest gelagert sind, und dass in Fahrzeugquerrichtung (y-Richtung) gesehen zwischen den besagten ersten Lagerstellen (9, 10) der Elektromotor (8) an der Fahrzeugkarosserie oder am fahrzeugfesten Spoilergehäuse (4) festgelegt ist und mittels eines Kniehebelmechanismus (26) in einer zweiten Lagerstelle (27) des Spoilerblattes (5) mit demselben wirkverbunden ist.

2. Spoilervorrichtung nach Anspruch 1, **dadurch gekennzeichnet, dass** der Kniehebelmechanismus (26) einen ersten, einenends mit einer Ausgangswelle (25) drehfest verbundenen Hebel (28) aufweist, welcher erste Hebel (28) anderenends mit einem Ende eines zweiten Hebels (29) gelenkig verbunden ist, wobei das andere Ende des zweiten Hebels (29) in der zweiten Lagerstelle (27) des Spoilerblattes (5) mit demselben gelenkig verbunden ist.

3. Spoilervorrichtung nach Anspruch 2, **dadurch gekennzeichnet, dass** der erste Hebel (28) U-Profil-förmig mit einem zwei beabstandet zueinander angeordnete Seitenwangen (31, 32) untereinander verbindenden Steg (33) ausgebildet ist, wobei der Steg (33) eine Bohrung zur drehfesten Anbindung der Ausgangswelle (25) aufweist und die Seitenwangen (31, 32) untereinander korrespondierende Bohrungen zur gelenkigen Anbindung des zweiten Hebels (29) mittels einer Achse (34) aufweisen.

4. Spoilervorrichtung nach einem der Ansprüche 1 bis 3, **dadurch gekennzeichnet, dass** das dem Spoilerblatt (5) zugewandte und mit demselben durch eine Schraubverbindung drehfest verbindbare erste Ende (15) des Scharnierhebels (11) zumindest ein Mittel (17a, 17b) zur Positionierung des Scharnierhebels (11) relativ zum Spoilerblatt (5) aufweist.

5. Spoilervorrichtung nach Anspruch 4, **dadurch gekennzeichnet, dass** das Mittel (17a, 17b) zur Positionierung durch ein Langloch im Scharnierhebel (11) für besagte Schraubverbindung desselben mit dem Spoilerblatt (5) sowie durch eine stirnseitige, konkave, erste Kontur (19) des Scharnierhebels (11), welche erste Kontur (19) mit einer konvexen, zweiten Kontur des Spoilerblattes (5) korrespondiert oder umgekehrt, gebildet ist.

6. Spoilervorrichtung nach einem der Ansprüche 1 bis 5, **dadurch gekennzeichnet, dass** der Elektromotor (8) mit einer elektronischen Steuer- und Regelungseinheit (ECU) verbunden ist und in Abhängigkeit von in einer Software derselben hinterlegten Systemparametern sowie aktuell sensierten Fahrtzuständen des Fahrzeugs (1) in definierten Stufen oder stufenlos regel- und steuerbar ist.

7. Spoilervorrichtung nach Anspruch 6, **dadurch gekennzeichnet, dass** die Spoilervorrichtung Mittel zur Wegerfassung und/oder Endanschläge zur Positionserfassung des Spoilerblattes (5) aufweist, welche Mittel zur Wegerfassung und/oder Endanschläge Signale generieren, die ebenfalls der Steuer- und Regelungseinheit (ECU) zur Auswertung und Generierung von Regel- und Steuerrungssignalen für den Elektromotor (8) zur Verfügung gestellt sind/werden.

8. Fahrzeug (1), insbesondere Kraftfahrzeug, mit einer Spoilervorrichtung nach einem der Ansprüche 1 bis 7.

9. Verfahren zum Betreiben einer Spoilervorrichtung nach einem der Ansprüche 1 bis 7, wobei Systemparameter der Steuer- und Regelungseinheit (ECU) so ausgelegt sind, dass die Verstellung des Spoilerblattes (5) sowohl geschwindigkeitsabhängig als auch nach dem Grad der Verzögerung des Fahrzeugs (1) durchgeführt wird, wobei im Hinblick auf eine Verstellung des Spoilerblattes (5) in definierten Stufen zumindest eine Stufe für den Fahrbetrieb des Fahrzeugs (1) und zusätzlich eine weitere Stufe bei maximaler Verzögerung des Fahrzeugs (1) vorgesehen sind, wobei
- eine Verstellung des Spoilerblattes (5) von einer Stufe zur anderen, d.h., sowohl zur höheren als auch zur niederen, nur dann erfolgt, wenn für eine vorgegebene Zeit von zumindest 5s der betreffende Geschwindigkeitsbereich eingehalten wird, wobei
- im Falle, das Fahrzeug (1) kommt in eine Notbremssituation mit maximaler Verzögerung, unabhängig der aktuell zu verzeichnenden Stufe des Spoilerblattes (5) die Verstellung desselben unmittelbar in die weitere Stufe erfolgt, welche mit einem maximalen Verstellwinkel und einem maximalen Luftwiderstand einhergeht, und wobei
- vorzugsweise drei Stufen für den Fahrbetrieb des Fahrzeugs (1) vorgesehen sind derart, dass
- im Bereich vom Stillstand des Fahrzeugs (1) bis etwa 120 km/h Fahrtgeschwindigkeit desselben das Spoilerblatt (5) sich in einer ersten Betriebsstellung, die der Grundstellung desselben entspricht, befindet ("Stufe 0"), dass
- zwischen etwa 120 km/h und etwa 150 km/h der Anstellwinkel des Spoilerblattes (5) erhöht wird, und dieses sich in einer zweiten Betriebsstellung befindet, welche einer "Stufe 1" entspricht, dass
- zwischen etwa 150 km/h und etwa 180 km/h der Anstellwinkel des Spoilerblattes (5) weiter erhöht wird, und dieses sich in einer dritten Betriebsstellung befindet, welche einer "Stufe 2" entspricht, und dass
- ab 180 km/h der Anstellwinkel des Spoilerblattes (5) noch weiter erhöht wird, und dieses sich in einer dritten Betriebsstellung befindet, welche einer "Stufe 3" entspricht.

10. Verfahren nach Anspruch 9, **dadurch gekennzeichnet, dass** im Falle einer undefinierten Abweichung des Systems von definierten Systemparametern und -vorgaben, die Verstellung des Spoilerblattes (5) gestoppt und das System in einen Modus "Störung" gesetzt wird und/oder dass die Stromaufnahme des Elektromotors (8) laufend gemessen sowie ausgewertet wird und bei einer Abweichung oder eines Trends einer Abweichung der gemessenen von vorgegebenen Werten, eine sofortige Abschaltung des Verstellsystems für das Spoilerblatt (5) erfolgt und dieses in besagten Modus "Störung" gesetzt wird, wobei in beiden Fällen der Modus "Störung" akustisch und/oder optisch dem Fahrzeugführer mitgeteilt wird.

## Claims

1. Spoiler device for a vehicle (1), in particular motor vehicle, with a spoiler blade (5) extending in a vehicle transverse direction (y-direction), which is mounted pivotably about a vehicle transverse axis (6) on the vehicle body or vehicle-fixed spoiler housing (4) and can be actively moved by means of an electric motor (8) from a first operating position to at least a second operating position and vice versa, wherein the spoiler blade (5) has at both ends a respective first bearing point (9, 10) and is mounted there pivotably by means of a respective hinge (9, 10a) on the vehicle body or the spoiler housing (4) **characterized in that**, the hinges (9, 10a) for the pivotable mounting of the spoiler blade (5) on the vehicle body or the vehicle-fixed spoiler housing (4) are each formed by an arcuate hinge lever (11) which hinge levers (11) are at one end rotatably mounted on the vehicle body or on the vehicle-fixed spoiler housing (4) and at the other end non-rotatably mounted on the spoiler blade (5), and that viewed in transverse direction of the vehicle (y-direction) between said first bearing points (9, 10) the electric motor (8) is fixed to the vehicle body or to the vehicle-fixed spoiler housing (4) and operatively connected to the spoiler blade (5) by means of a toggle lever mechanism (26) in a second bearing point (27) of the spoiler blade (5).

2. Spoiler device according to claim 1, **characterized in that**, the toggle lever mechanism (26) has a first lever (28) which is connected on one end non-rotatably to an output shaft (25), which first lever (28) is connected in an articulated manner at the other end to an end of a second lever (29), wherein the other end of the second lever (29) is connected to the spoiler blade (5) in an articulated manner in the second bearing point (27) of the spoiler blade (5).

3. Spoiler device according to claim 2, **characterized in that** the first lever (28) is designed to be U-profile-shaped with a web (33) connecting two side cheeks (31, 32) arranged at a distance from one another, wherein the web (33) has a bore for a non-rotatably connection of the output shaft (25) and the side cheeks (31, 32) have bores corresponding with each other for the articulated connection of the second lever (29) by means of an axle (34).

4. Spoiler device according to one of claims 1 to 3, **characterized in that**, the first end (15) of the hinge lever (11) which faces the spoiler blade (5) and can be connected to the latter non-rotatably by means of a screw connection has at least one means (17a, 17b) for positioning the hinge lever (11) relative to the spoiler blade (5).

5. Spoiler device according to claim 4, **characterized in that**; the means (17a, 17b) for positioning is formed through an elongated hole in the hinge lever (11) for said screwed connection of the latter to the spoiler blade (5) and by an end-side, concave, first contour (19) of the hinge lever (11), which first contour (19) corresponds to a convex, second contour of the spoiler blade (5) or vice versa.

6. Spoiler device according to one of claims 1 to 5, **characterized in that**, the electric motor (8) is connected to an electronic control and regulation unit (ECU) and can be controlled and regulated in dependence on system parameters stored in a software of the same as well as currently sensed driving conditions of the vehicle (1) in defined stages or infinitely variable.

7. Spoiler device according to claim 6, **characterized in that**, the spoiler device comprises means for way detection and/or end stops for detecting the position of the spoiler blade (5), which means for way detection and/or end stops generate signals, which are also provided to the electronic control and regulation unit (ECU) for an evalution and generation of regulation and control signals for the electric motor (8).

8. Vehicle (1), in particular motor vehicle, with a spoiler device according to one of claims 1 to 7.

9. Method for operating a spoiler device according to one of claims 1 to 7, wherein system parameters of the control and regulation unit (ECU) are designed in such a way that the adjustment of the spoiler blade (5) is carried out both speed-dependent and according to the degree of deceleration of the vehicle (1), wherein, with regard to an adjustment of the spoiler blade (5) in defined stages, at least one stage for the driving operation of the vehicle (1) and additionally a further stage at maximum deceleration of the vehicle (1) are provided, wherein
- an adjustment of the spoiler blade (5) from one stage to the other, i.e., both to the higher and to the lower, takes place only if, for a predetermined time of at least 5s, the relevant speed range is maintained, wherein
- in the event that the vehicle (1) comes into an emergency brake situation with maximum deceleration, independently of the current stage of the spoiler blade (5) the adjustment of the same takes place directly into the further stage which is associated with a maximum adjustment angle and a maximum air resistance, and wherein
- preferably three stages are provided for the driving operation of the vehicle (1) in such a way that
- in the range from standstill of the vehicle (1) to about 120 km/h of travel speed of the same, the spoiler blade (5) is in a first operating position, which corresponds to the basic position of the same ("stage 0"), that
- between about 120 km/h and about 150 km/h the angle of attack of the spoiler blade (5) is increased, and it is in a second operating position which corresponds to a "stage 1", that
- between about 150 km/h and about 180 km/h the angle of attack of the spoiler blade (5) is further increased, and it is in a third operating position, which corresponds to a "stage 2", and that
- from 180 km/h, the angle of attack of the spoiler blade (5) is further increased, and it is in a third operating position, which corresponds to a "stage 3".

10. Method according to claim 9, **characterized in that**, in the event of an undefined deviation of the system from defined system parameters and specifications, the adjustment of the spoiler blade (5) is stopped and the system is set into a "disturbance" mode and/or **in that** the current consumption of the electric motor (8) is continuously measured and evaluated and in the case of a deviation or a trend of a deviation of the measured from predetermined values, an immediate shutdown of the adjustment system for the spoiler blade (5) takes place and this is set in said mode "disturbance", wherein in both cases the mode "disturbance" is communicated acoustically and/or optically to the vehicle driver.

## Revendications

1. Dispositif formant aileron pour un véhicule (1), en particulier véhicule automobile, comportant une pale d'aileron (5) s'étendant dans le sens transversal de véhicule (direction y), laquelle est montée sur la carrosserie de véhicule ou un boîtier d'aileron (4) solidaire du véhicule de manière à pouvoir pivoter autour d'un axe transversal de véhicule (6) et peut être transférée de manière active, au moyen d'un moteur électrique (8), d'une première position de fonctionnement vers au moins une deuxième position de fonctionnement et inversement, la pale d'aileron (5) présentant au niveau des deux extrémités respectivement un premier point d'appui (9, 10) et y étant montée sur la carrosserie de véhicule ou sur le boîtier d'aileron (4) de manière à pouvoir pivoter par l'intermédiaire de respectivement une charnière (9a, 10a), **caractérisé en ce que** les charnières (9a, 10a) sont formées, pour l'appui de manière à pouvoir pivoter de la pale d'aileron (5) sur la carrosserie de véhicule ou le boîtier d'aileron (4) solidaire du véhicule, par respectivement un levier de charnière (11) réalisé en forme d'arc, lesquels leviers de charnière (11) sont montés à une extrémité de manière à pouvoir tourner sur la carrosserie de véhicule ou sur le boîtier d'aileron (4) solidaire du véhicule et à l'autre extrémité de manière solidaire en rotation sur la pale d'aileron (5), et **en ce que**, vu dans le sens transversal de véhicule (direction y), le moteur électrique (8) est fixé entre lesdits premiers points d'appui (9, 10) sur la carrosserie de véhicule ou sur le boîtier d'aileron (4) solidaire du véhicule et est relié de manière fonctionnelle à ladite pale d'aileron au moyen d'un mécanisme à levier à genouillère (26) dans un second point d'appui (27) de la pale d'aileron (5).

2. Dispositif formant aileron selon la revendication 1, **caractérisé en ce que** le mécanisme à levier à genouillère (26) présente un premier levier (28) relié à une extrémité à un arbre de sortie (25) de manière solidaire en rotation, lequel premier levier (28) est relié à l'autre extrémité à une extrémité d'un second levier (29) de manière articulée, l'autre extrémité du second levier (29) étant reliée de manière articulée, dans le second point d'appui (27) de la pale d'aileron (5), à ladite pale d'aileron.

3. Dispositif formant aileron selon la revendication 2, **caractérisé en ce que** le premier levier (28) est réalisé en forme de profilé en U comportant une nervure (33) reliant entre elles deux joues latérales (31, 32) espacées l'une de l'autre, la nervure (33) présentant un alésage pour la fixation de manière solidaire en rotation de l'arbre de sortie (25) et les joues latérales (31, 32) présentant des alésages correspondants entre eux pour le raccordement de manière articulée du second levier (29) au moyen d'un axe (34).

4. Dispositif formant aileron selon l'une des revendications 1 à 3, **caractérisé en ce que** la première extrémité (15) du levier de charnière (11) tournée vers la pale d'aileron (5) et pouvant être reliée à celle-ci de manière solidaire en rotation par une liaison vissée présente au moins un moyen (17a, 17b) permettant le positionnement du levier de charnière (11) par rapport à la pale d'aileron (5).

5. Dispositif formant aileron selon la revendication 4, **caractérisé en ce que** le moyen (17a, 17b) permettant le positionnement est formé par un trou oblong dans le levier de charnière (11) pour ladite liaison vissée de celui-ci à la pale d'aileron (5) ainsi que par un premier contour (19) concave côté frontal du levier de charnière (11), lequel premier contour (19) correspond à un second contour convexe de la pale d'aileron (5) ou inversement.

6. Dispositif formant aileron selon l'une des revendications 1 à 5, **caractérisé en ce que** le moteur électrique (8) est relié à une unité de commande et de régulation (ECU) électronique et peut être régulé et commandé en niveaux définis ou en continu en fonction de paramètres du système enregistrés dans un logiciel de celle-ci ainsi que d'états d'avancement actuellement détectés du véhicule (1).

7. Dispositif formant aileron selon la revendication 6, **caractérisé en ce que** le dispositif formant aileron présente des moyens pour la détection de la trajectoire et/ou des butées de fin de course pour la détection de la position de la pale d'aileron (5), lesquels moyens pour la détection de la trajectoire et/ou butées de fin de course générant des signaux qui sont également fournis à l'unité de commande et de régulation (ECU) pour l'évaluation et la génération de signaux de régulation et de commande pour le moteur électrique (8).

8. Véhicule (1), en particulier véhicule automobile, comportant un dispositif formant aileron selon l'une des revendications 1 à 7.

9. Procédé permettant de faire fonctionner un dispositif formant aileron selon l'une des revendications 1 à 7, des paramètres du système de l'unité de commande et de régulation (ECU) étant configurés de telle sorte que le déplacement de la pale d'aileron (5) est mis en oeuvre à la fois en fonction de la vitesse et selon le degré de décélération du véhicule (1), au moins un niveau pour le fonctionnement en conduite du véhicule (1) et, en outre, un autre niveau lors de la décélération maximale du véhicule (1) étant prévus en vue d'un déplacement de la pale d'aileron (5) en niveaux définis,
- un déplacement de la pale d'aileron (5) d'un niveau à un autre, c'est-à-dire aussi bien le plus en haut possible que le plus en bas possible, n'est effectué que si la plage de vitesse concernée est respectée pendant une durée prédéterminée d'au moins 5 s,
- dans le cas où le véhicule (1) entre dans une situation de freinage d'urgence avec une décélération maximale, indépendamment du niveau actuellement enregistré de la pale d'aileron (5), le déplacement de celle-ci est effectué directement vers le niveau suivant, lequel déplacement est accompagné d'un angle de déplacement maximal et d'une résistance à l'air maximale, et
- de préférence, trois niveaux pour le fonctionnement en conduite du véhicule (1) étant prévus de telle sorte que
- dans la plage allant de l'arrêt du véhicule (1) à une vitesse d'avancement de celui-ci d'environ 120 km/h, la pale d'aileron (5) se trouve dans une première position de fonctionnement correspondant à la position de base de celle-ci (« niveau 0 »), que
- entre environ 120 km/h et environ 150 km/h, l'angle d'attaque de la pale d'aileron (5) est augmenté et celle-ci se trouve dans une deuxième position de fonctionnement correspondant à un « niveau 1 », que
- entre environ 150 km/h et environ 180 km/h, l'angle d'attaque de la pale d'aileron (5) est encore augmenté et celle-ci se trouve dans une troisième position de fonctionnement qui correspond à un « niveau 2 », et que
- à partir de 180 km/h, l'angle d'attaque de la pale d'aileron (5) est encore plus augmenté et celle-ci se trouve dans une troisième position de fonctionnement correspondant à un « niveau 3 ».

10. Procédé selon la revendication 9, **caractérisé en ce que**, dans le cas d'un écart non défini du système par rapport à des paramètres et des spécifications définis du système, le déplacement de la pale d'aileron (5) est arrêté et le système entre dans un mode « défaut » et/ou **en ce que** la consommation de courant du moteur électrique (8) est mesurée et évaluée en continu et, en cas d'écart ou de tendance à l'écart des valeurs mesurées par rapport aux valeurs prédéterminées, une désactivation immédiate du système de déplacement de la pale d'aileron (5) est effectué et ledit système entre dans ledit mode « défaut », dans les deux cas, le mode « défaut » étant communiqué au conducteur du véhicule de manière acoustique et/ou optique.
